# DEMANDE DE BREVET EUROPEEN

(11) **EP 1 109 190 A1**
(43) Date de publication de la demande: **20.06.2001**
(21) Numéro de dépôt: 00403501.0
(22) Date de dépôt: 13.12.2000
(51) Int. Cl.: H01H 85/20, H05K 7/02, B60R 16/02

(54) **Boîte à fusibles pour véhicules automobiles**

(30) Priorité: 15.12.1999 FR 9915831
(71) Demandeur: Société SYLEA, 78190 Montigny le Bretonneux (FR)
(72) Inventeur: Bourroux, Christian, Hameau de Haute-Maison, 78125 Orphin (FR); Torcheux, Bertrand, 78370 Plaisir (FR)
(74) Mandataire: Faber, Jean-Paul

(57) **Abrégé**

Boîte à fusibles du type formé d'un corps relié à un faisceau électrique (7) d'alimentation et comportant des réceptacles insérés sur des circuits électriques, et destiné à recevoir des organes de protection de ces derniers (5, 26, 43), caractérisée en ce que le corps est formé d'une série de tronçons (1, 2, 3) sur chacun desquels est directement monté un câblage correspondant à l'alimentation d'une partie des organes électriques du véhicule, lesdits tronçons (1, 2, 3) étant pourvus de moyens pour leur assemblage entre eux, d'une part, et, d'autre part, de moyens pour la connexion des différents circuits électriques entre eux.

## Description

La présente invention concerne une boîte à fusibles pour véhicules automobiles.

Par boîte à fusibles, on entend un boîtier comportant un certain nombre de réceptacles insérés sur des circuits électriques et destinés à recevoir les plots de fusibles ainsi que des dispositifs électriques tels que des relais.

Dans la construction automobile, par exemple, on pose à un endroit déterminé, la boîte à fusibles puis les différents câblages qui sont pourvus, à leur extrémité destinée à être reliée à la boîte à fusibles, de connecteurs ceux-ci étant montés sur des organes de connexions électriques correspondants prévus sur ladite boîte à fusibles.

Actuellement, les véhicules automobiles comportent de plus en plus de dispositifs électriques ou électroniques de sorte que les câblages sont de plus en plus importants et les boîtes à fusibles de plus en plus volumineuses.

La pose des organes de connexions électriques sur les boîtes à fusibles constitue un travail long avec une source d'erreur importante.

L'un des buts de la présente invention est de remédier à cet inconvénient.

La boîte à fusibles pour véhicules automobiles, selon l'invention, est du type comportant un corps relié à un faisceau électrique d'alimentation et comportant un certain nombre de réceptacles insérés sur des circuits électriques convenables et destinés à recevoir des organes de protection des circuits tels que des fusibles, relais ou autres, ladite boîte à fusibles étant caractérisée en ce que le corps est formé d'une série de tronçons sur chacun desquels est directement monté un câblage correspondant à l'alimentation d'une partie des organes électriques du véhicule, lesdits tronçons comportant, d'une part, des moyens pour leur assemblage entre eux et, d'autre part, des moyens pour la connexion des différents circuits électriques entre eux à partir du faisceau électrique d'alimentation.

Grâce à une telle disposition, on peut, lors de la réalisation du câblage d'un véhicule, directement effectuer tous les branchements sur les différents tronçons qui sont ainsi prêts à être posés sur le véhicule.

Une telle disposition permet également, pour chaque tronçon, de prévoir l'alimentation d'une partie déterminée des organes électriques du véhicule ce qui facilite le montage.

Suivant une caractéristique particulière, la boîte à fusibles est constituée d'un tronçon principal relié au faisceau électrique d'alimentation et comportant, sur deux côtés opposés, des moyens pour sa fixation sur les côtés correspondants de deux tronçons latéraux.

Suivant une caractéristique constructive, le tronçon principal comporte, sur les deux côtés opposés, des saillies, tandis que les côtés correspondants des tronçons latéraux sont pourvus de rainures destinées à recevoir les saillies.

Suivant encore une caractéristique constructive, le tronçon principal présente, sur deux côtés opposés, des épaulements, tandis que les côtés correspondants des tronçons latéraux sont pourvus de décrochements correspondants, les saillies étant prévues sur les parois adjacentes aux épaulements et les rainures sur les parois des décrochements.

Suivant encore une autre caractéristique, les épaulements du tronçon principal sont pourvus d'une série de languettes reliées aux circuits électriques, tandis que les décrochements des tronçons latéraux comportent une série de logements dans lesquels sont disposés des organes femelles de contact électrique insérés sur des circuits convenables et destinés à recevoir les languettes du tronçon principal.

Suivant un détail constructif, l'un des logements au moins de l'un des tronçons latéraux comporte une languette insérée sur un circuit électrique et un organe de liaison électrique est engagé sur cette languette et présente une pince élastique de réception de la languette de l'épaulement du tronçon principal.

Suivant encore un détail constructif, l'un au moins des logements de l'un des tronçons latéraux est conformé de manière à constituer un canal de réception d'un organe de contact électrique présentant une pince de réception d'une languette d'un épaulement du tronçon principal et des moyens pour le sertissage d'un conducteur électrique.

Enfin, suivant une dernière caractéristique, les différents tronçons comportent des moyens de liaison électrique avec un calculateur, le faisceau d'alimentation électrique comportant une dérivation pour l'alimentation dudit calculateur.

L'invention va maintenant être décrite avec plus de détails en se référant à un mode de réalisation particulier donné à titre d'exemple seulement et représenté aux dessins annexés, dans lesquels :
Figure 1 est une vue en perspective éclatée d'une boîte à fusibles, selon l'invention.
Figure 2 est une vue schématique en coupe éclatée.
Figure 3 est une vue en perspective d'un organe de liaison électrique.
Figure 4 est une vue en perspective d'un organe de contact électrique.

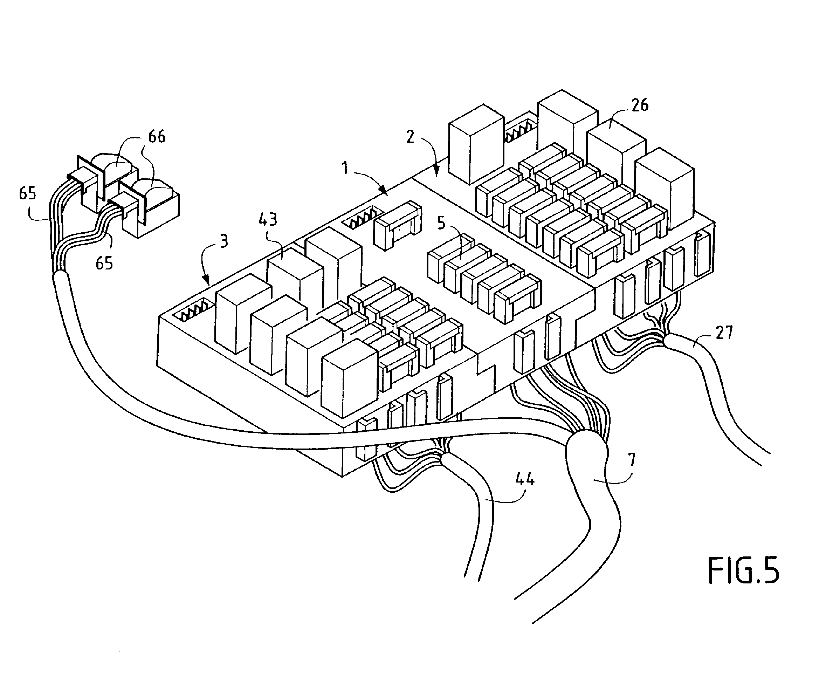

Figure 5 montre en perspective la boîte à fusibles assemblée.
Figure 6 montre un exemple du montage de la boîte à fusibles sur un véhicule.
Figure 7 et figure 8 sont des vues en perspective montrant les différentes fonctions des différents tronçons de boîte à fusibles.
Figure 9 montre en coupe la liaison des différents tronçons de boîte à fusibles.
Figure 10 montre en perspective un exemple d'assemblage des tronçons entre eux.

La boîte à fusibles représentée aux figures comprend un tronçon principal 1 et deux tronçons latéraux 2 et 3.

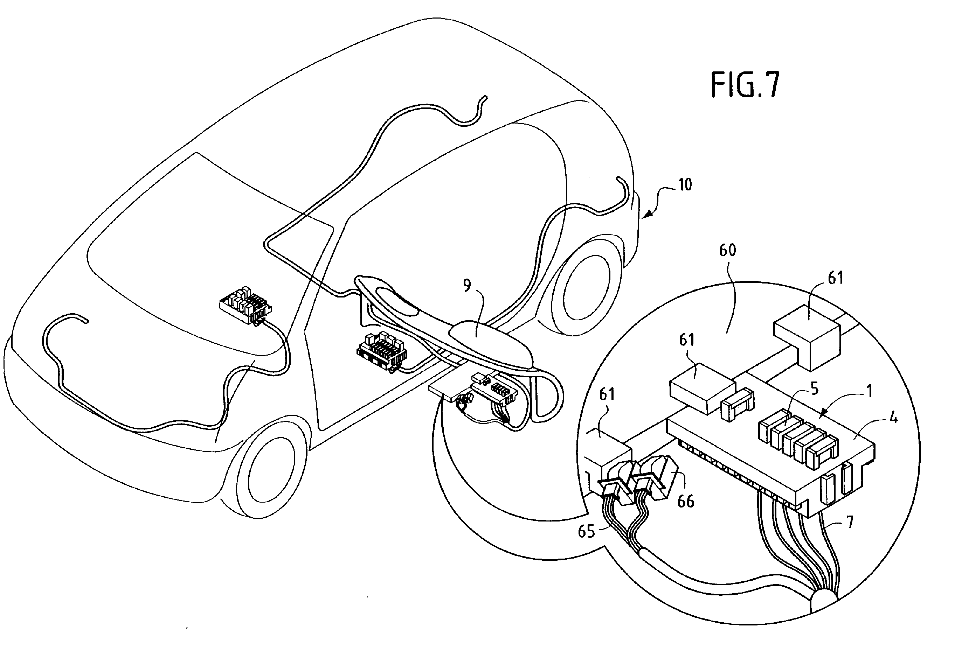

Le tronçon principal 1 est constitué d'un élément de boîtier 4 supportant un certain nombre de fusibles, relais ou autres 5, et sur lequel est directement monté, à la fabrication, un câblage 7, ce dernier, dans l'exemple de réalisation représenté, étant destiné à l'alimentation (voir figure 7) des différents équipements du tableau de bord 9 d'un véhicule automobile 10. Le câblage 7 constitue le faisceau principal d'alimentation électrique.

A une extrémité, l'élément de boîtier 4 comporte un logement 11 à partir du fond duquel s'érigent une série de languettes de contact 12 reliées à des circuits convenables.

Le tronçon principal 1 comporte, de chaque côté de ses bords longitudinaux, des épaulements 13 et 14.

Les épaulements 13 supportent une série de languettes de contact 15 reliées à des circuits convenables, tandis que les épaulements 14 sont pourvus d'une série de languettes de contact 16 également reliées à des circuits convenables.

L'un des côtés 18, adjacents à l'épaulement 14, comporte, régulièrement espacées, des saillies 19, tandis que le côté 22, adjacent à l'épaulement 14, est pourvu de saillies 21 régulièrement espacées.

Le tronçon latéral 2 est formé d'un élément de boîtier 25 supportant un certain nombre de fusibles, relais ou autres 26, insérés sur des circuits de protection convenables. Le câblage correspondant 27 est directement monté à la fabrication.

Sur un côté 25a du boîtier est formé un décrochement 28 présentant une série de logements 29.

Dans les logements 29 s'étendent des languettes 30 reliées à des circuits électriques du tronçon 2.

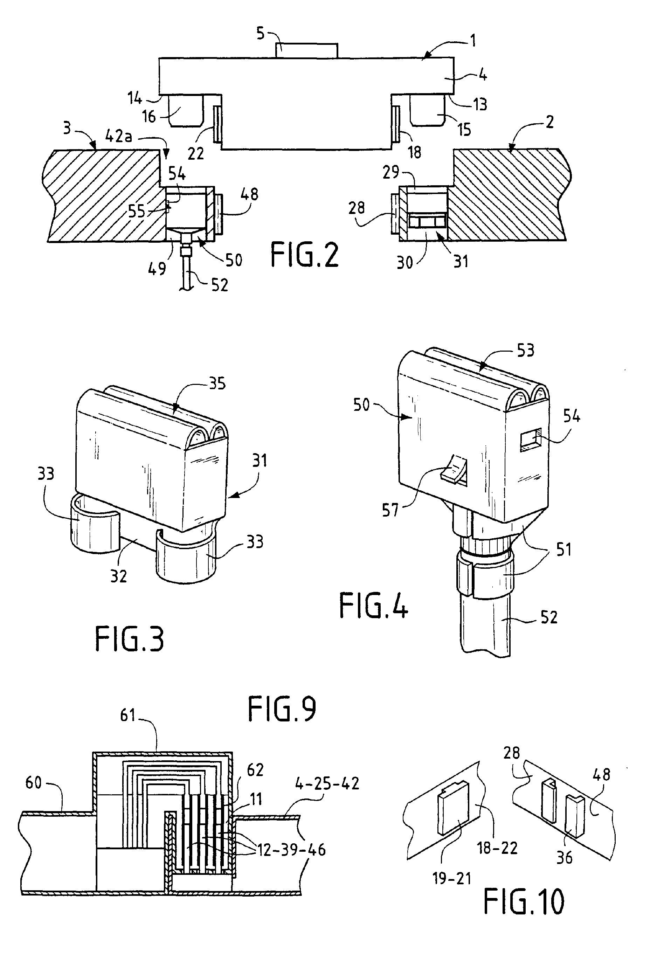

Ces languettes 30 sont destinées à recevoir des organes de liaison électrique 31 (voir figure 3).

Ces organes 31 sont réalisés en une seule pièce d'un métal bon conducteur de l'électricité comportant une âme 32 avec deux prolongements latéraux 33 repliés vers l'âme afin d'enserrer élastiquement la languette 30.

L'organe 31 est découpé et plié afin de former une pince élastique 35 destinée à recevoir une languette 15 correspondante.

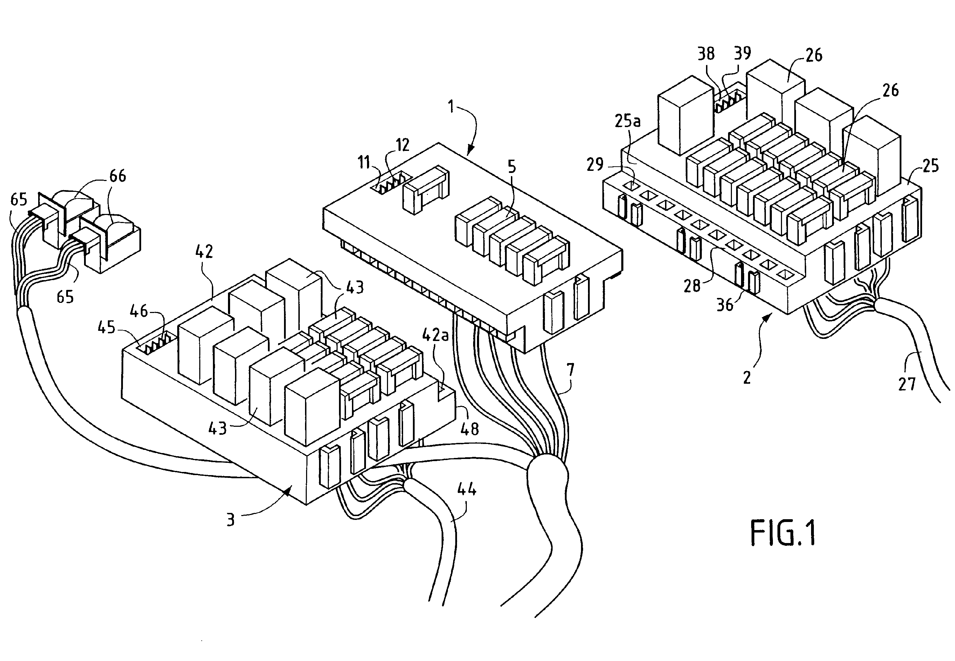

Le décrochement 28 est pourvu d'une série de rainures 36 (voir figures 1 et 10) destinées à recevoir les saillies 19 afin d'assurer un assemblage mécanique entre les deux tronçons 1 et 2.

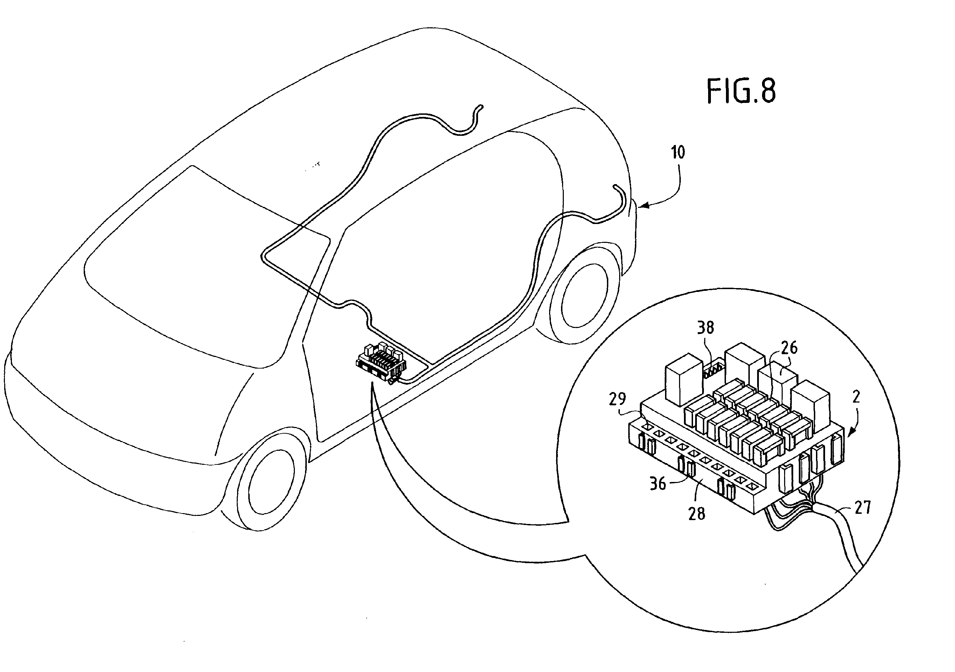

Comme on le voit à la figure 8, le tronçon 2 est destiné à la protection des circuits d'alimentation de la partie arrière du véhicule 10 (feux arrière, stop, éclairage, plaque arrière, feux de recul).

L'élément de boîtier 25 est pourvu d'un logement 38 à partir du fond duquel s'étendent une série d'organes mâles de contact électrique 39.

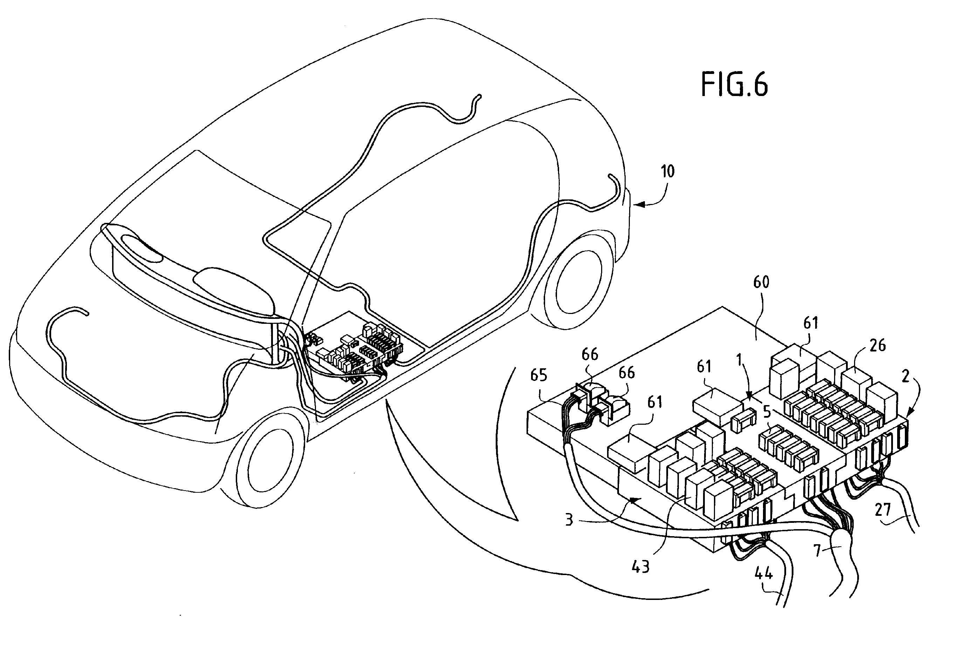

Le tronçon 3 est constitué d'un élément de boîtier 42 supportant une série de fusibles, de relais ou autres 43, insérés sur des circuits électriques. Le boîtier 42 reçoit directement un câblage 44 pour l'alimentation desdits circuits, ledit câblage 44 étant destiné à l'alimentation des différents organes du compartiment moteur du véhicule 10 (voir figure 6).

L'élément de boîtier 42 présente un logement 45 avec des organes mâles 46.

Le long d'un côté 42a, le tronçon 3 présente un décrochement 48 correspondant à l'épaulement 14, ce décrochement étant pourvu d'une série de canaux 49 destinés à recevoir chacun un organe de contact électrique femelle 50 (voir figure 4).

Les organes de contact électrique 50 sont réalisés à partir d'un flan métallique bon conducteur de l'électricité découpé et plié pour présenter, à une extrémité, des pattes 51 de sertissage d'un conducteur 52 et, à l'autre extrémité, une pince 53 de réception d'une languette 16.

Un des côtés de l'organe 50 peut présenter une ouverture 54 pour recevoir une saillie de retenue 55 du canal 49, tandis qu'un autre côté peut être pourvu d'une barrette 57 destinée à coopérer avec une butée du canal 49 afin, qu'une fois mis en place, les organes 50 soient parfaitement verrouillés dans les canaux correspondants.

Le décrochement 48 est pourvu de rainures 36 destinées à recevoir les saillies 21 du côté 22 (voir figure 10).

Le véhicule 10 peut être pourvu d'un calculateur 60 comportant trois organes de connections électriques 61 présentant des organes de connections femelles 62 reliés à des circuits électriques dudit calculateur et destinés à coopérer, l'un avec les languettes 12 du logement 11 (voir figure 9), le second avec les languettes 39 du logement 38 et le troisième avec les languettes 46, du logement 45.

Dans le mode de réalisation représenté, on a supposé que les logements 29 étaient tous garnis d'une languette 30 et les canaux 49 recevaient tous des organes 50, mais il est bien évident que certains logements 29 pourraient être agencés pour recevoir des organes 50 et que certains canaux 49 pourraient être pourvus de languettes 30.

Le côté du calculateur 60 destiné à être appliqué contre les côtés correspondants des tronçons 1, 2 et 3 peut être pourvu de rainures et les tronçons de saillies correspondantes ou vice et versa.

Sur le faisceau électrique du premier tronçon 1 sont prévus des conducteurs 65 avec des connecteurs 66 d'alimentation du calculateur 60.

Bien entendu, l'invention n'est pas limitée au mode de réalisation qui vient d'être décrit et représenté. On pourra y apporter de combreuses modifications de détail sans sortir pour cela du cadre de l'invention.

## Revendications

1. Boîte à fusibles pour véhicules automobiles du type comportant un corps relié à un faisceau électrique d'alimentation et comportant un certain nombre de réceptacles insérés sur des circuits électriques convenables et destinés à recevoir des organes de protection des circuits tels que des fusibles, relais ou autres, le corps étant formé d'une série de tronçons (1, 2, 3) sur chacun desquels est directement monté un câblage correspondant à l'alimentation d'une partie des organes électriques du véhicule, lesdits tronçons (1, 2, 3) comportant, d'une part, des moyens pour leur assemblage entre eux (19, 21, 36) et, d'autre part, des moyens pour la connexion des différents circuits électriques entre eux (15, 16, 30, 31, 50) à partir du faisceau électrique d'alimentation, caractérisée en ce qu'elle comporte un tronçon principal (1) relié au faisceau électrique d'alimentation (7) et comportant, sur deux côtés opposés des saillies (19, 21), tandis que les côtés correspondants des tronçons latéraux sont pourvus de rainures (36) destinées à recevoir les saillies, les côtés du tronçon principal (1) pourvus des saillies (19 et 21) présentant des épaulements (13, 14) et les tronçons latéraux, sur les côtés pourvus des rainures, des décrochements (28, 48), lesdits épaulements (13 et 41) du tronçon principal (1) comportant une série de languettes (15, 16) reliées aux circuits électriques, tandis que les décrochements (28, 48) des tronçons latéraux (2 et 3) comportent une série de logements (29, 49) dans lesquels sont disposés des organes femelles de contact électrique (31, 50) insérés sur des circuits convenables et destinés à recevoir les languettes (15, 16) du tronçon principal (1).

2. Boîte à fusibles pour véhicules automobiles, selon la revendication 1, caractérisée en ce que l'un des logements (29), au moins de l'un des tronçons latéraux (2) comporte une languette (30) insérée sur un circuit électrique et un organe de liaison électrique (31) est engagé sur cette languette (30) et présente une pince élastique (35) de réception de la languette (15) de l'épaulement (13) du tronçon principal.

3. Boîte à fusibles pour véhicules automobiles, selon la revendication 1, caractérisée en ce que l'un au moins des logements (49) de l'un des tronçons latéraux (3) est conformé de manière à constituer un canal de réception (49) d'un organe de contact électrique (50) présentant une pince (53) de réception d'une languette (16) d'un épaulement du tronçon principal et des moyens (51) pour le sertissage d'un conducteur électrique.

4. Boîte à fusibles pour véhicules automobiles, selon la revendication 1, caractérisée en ce que les différents tronçons comportent des moyens de liaison électrique (12, 39, 46) avec un calculateur (60), le faisceau d'alimentation électrique comportant une dérivation (65) pour l'alimentation dudit calculateur.
